# EUROPÄISCHE PATENTSCHRIFT

(11) **EP 0 394 527 B1**
(45) Veröffentlichungstag und Bekanntmachung des Hinweises auf die Patenterteilung: **30.06.1993**
(21) Anmeldenummer: 89107629.1
(22) Anmeldetag: 27.04.1989
(51) Int. Cl.: H02K 19/24

(54) **Heteropolar erregte Synchronmaschine**
Heteropolary excited synchronous machine
Machine synchrone à excitation hétéropolaire

(43) Veröffentlichungstag der Anmeldung: 31.10.1990
(73) Patentinhaber: SIEMENS AKTIENGESELLSCHAFT, 80333 München (DE)
(72) Erfinder: Freise, Werner, Prof.Dr.-Ing., D-6750 Kaiserslautern (DE)

(56) Entgegenhaltungen:
- EP-A- 0 293 796
- DE-A- 3 009 279
- DE-A- 3 050 269
- SOVIET INVENTIONS ILLUSTRARED Sektion Electrotechnik, Woche EO5, Zusammenfassung Nr. B1972 E/O5, X11, 17 März 1982, Derwent publications Ltd., Londin, GB; & SU-A-824380.

## Beschreibung

Die Erfindung bezieht sich auf eine heteropolar erregte Synchronmaschine gemäß Oberbegriff des Anspruchs 1; eine derartige Synchronmaschine ist z.B. durch die DE-A1-30 09 279 bekannt.

Bei der durch die DE-A1-30 09 279 bekannten Anordnung sollen die Dauermagnete der betriebsmäßigen Erregung dienen und den besonderen Vorteil bringen, daß eine Erregerwicklung nicht erforderlich ist und damit Platz für die Arbeitswicklung gewonnen und/oder an Gewicht für die als Generator vorgesehene Synchronmaschine gespart werden kann; gemäß einer Ausgestaltung werden dann jedoch die Erregerwicklungen nur teilweise durch Dauermagnete ersetzt, derart daß sich beide Erregungsarten magnetisch getrennt am Umfang abwechseln.

Durch die DE-A1-30 50 269 ist ein heteropolarer Generator mit einem in Stator-Sektoren unterteilten Stator bekannt, bei dem die ausschließlich zur Erregung vorgesehene Erregerwicklung das Statorjoch umschlingt; Dauermagnete werden in diesem Fall nicht verwendet.

Gemäß Aufgabe vorliegender Erfindung soll bei zumindest gleichbleibender oder sogar verminderter Baugröße des Motors der Aufwand für die statorseitige Erregung reduziert werden; die Lösung dieser Aufgabe gelingt durch die Lehre des Anspruchs 1. Vorteilhafte Ausgestaltungen der Erfindung sind jeweils Gegenstand der Unteransprüche.

Bei der erfindungsgemäßen Konstruktion mit der um das Statorjoch gewickelten Erregerwicklung und dem entsprechend im Statorjoch gebündelten Luftspaltfluß kann im Vergleich zur vorgenannten bekannten Ausführung einer statorerregten Synchronmaschine der Erregerleistungsbedarf wegen der erfindungsgemäß erzielbaren wesentlich kürzeren Erregerwicklungs-Windungslänger bereits in vorteilhafter Weise gemindert werden; durch die Anordnung von tangential magnetisierenden Dauermagneten an den Trennstellen der Stator-Sektoren mit einer zur Magnetisierung der benachbarten Erregerwicklung jeweils entgegengesetzten Magnetisierung kann die radiale Bauhöhe des Statorjoches sowie die unerwünschte magnetische Streuung und damit der notwendige Erregerleistungsbedarf noch weiter gemindert werden, da die magnetische Spannung der Dauermagnete dem elektrisch erregten Streufeld entgegenwirkt und sogar zu einer magnetischen Entlastung der Statorjochabschnitte im Bereich der Erregerwicklungen beiträgt.

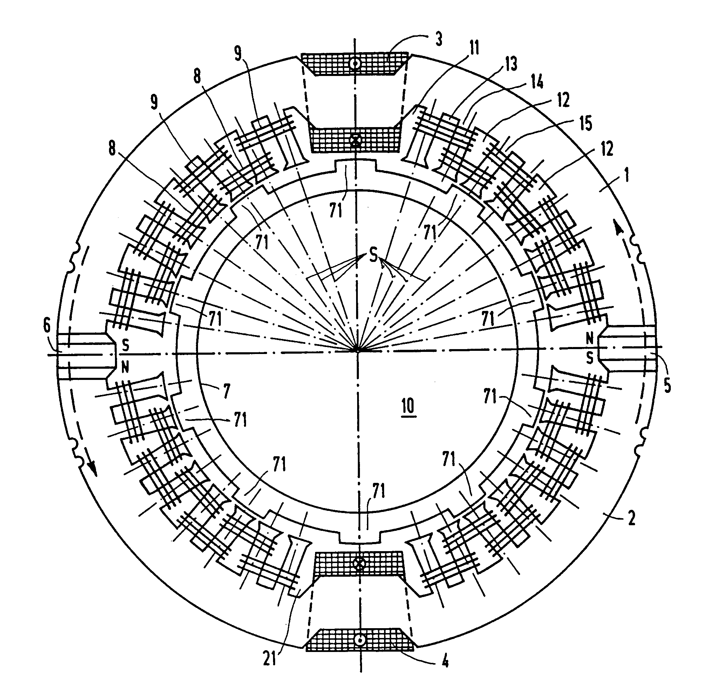

Die Erfindung sowie weitere vorteilhafte Ausgestaltungen der Erfindung werden im folgenden anhand eines schematisch dargestellten Ausführungsbeispiels in der Zeichnung näher erläutert.

Die Zeichnung zeigt die axiale Draufsicht auf ein aus zwei Stator-Sektoren 1 bzw.2 zusammengesetztes bewickeltes Statorsystem einer 2p = 4-poligen Erregeranordnung, in dessen Rotorbohrung ein Rotor 7 mit luftspaltseitigen Rotorzähnen 71 angeordnet ist. Pro Polpaar bzw. Stator-Sektor 1 bzw.2 sind tangential mittig in Nuten 11 bzw.21 die die Stator-Sektoren 1 bzw.2 umschlingenden Erregerwicklungen 3 bzw.4 eingebracht. An den Trennungsstellen zwischen dem ersten Stator-Sektor 1 und dem zweiten Stator-Sektor 2 sind jeweils Dauermagnete 5 bzw.6 angeordnet, deren tangentiale Magnetisierungsrichtung der der Erregerwicklungen 3,4 entgegengesetzt ist.

Eine gleichzeitig fertigungstechnisch vorteilhafte und kleinbauende Ausgestaltung der erfindungsgemäßen Synchronmaschine ist dadurch gekennzeichnet, daß die Stator-Segmente 1 bzw.2 im Bereich der umschlingenden Erregerwicklungen 3 bzw.4 unter Beibehaltung eines annähernd gleichen Querschnitts unter Bildung einer Statornut 11 bzw.21 für die Erregerwicklung 3 bzw.4 nach radial innen verlaufend ausgebildet sind.

Nach einer Ausgestaltung der Erfindung ist der Rotor 7 mit dem Schwungrad oder der Kupplungsscheibe eines Verbrennungsmotors, insbesondere in einem Kraftfahrzeug, integriert. In vorteilhafter Weise kann der freie Rotorraum radial innerhalb des Rotors 7 für Kupplungsbauteile verwendet werden. Insbesondere bei der Integrierung des Rotors mit Schwungrad und/oder Kupplungsscheibenteilen eines Verbrennungsmotors und somit der Verwendung der erfindungsgemäßen Synchronmaschine als Motor oder Generator kann es zweckmäßig sein, daß sich die Stator-Sektoren nur über einen Teil des Umfangs erstrecken, so daß die freibleibenden statorseitigen Zwischenräume für weitere konstruktive Befestigungsteile, z.B. Verbindungsbolzen zwischen der Verbrennungsmaschine und dem kupplungsseitigen angekoppelten Getriebe benutzbar sind.

Die in Umfangsrichtung gegeneinander wirkenden Magnetfelder von Dauermagneten und Erregerwicklungen addieren sich im Luftspalt funktionell vorteilhaft und schaffen im gezeigten Beispiel ein kräftiges trotz des Einsatzes der Dauermagnete dennoch voll einstellbares Luftspalt-Erregerfeldsystem. Bei abgeschaltetem Erregerstrom tritt nämlich das Dauermagnetfeld nicht in den Luftspalt der Maschine ein, sondern schließt sich entlang dem Umfang der Maschine. Wird ein luftspaltfeldfreier Zustand nicht gefordert, dann darf der von den Dauermagneten gelieferte Feldbeitrag sogar größer sein als der der Erregerwicklungen.

In vorteilhafter Weise läßt sich die axiale Baulänge der Maschine bei einer Wicklungsstrangzahl m=2 oder 4 und einer Nutenzahl je Pol und Wicklungsstrang q=1 für die Arbeitswicklung dadurch verringern, daß die Statorzähne 14 bzw.15 wechselweise nach links bzw. nach rechts gegenüber der radialen Symmetrielinie S im Sinne von sich wechselweise zum Nutgrund bzw. zur Nutöffnung erweiternder Querschnittsbreite der Statornuten 12 bzw.13 schräggestellt sind. Aus der Zeichnung ist ist erkennbar, daß z.B. der Wicklungsstrang 9 in den zum Nutgrund erweiterten Nuten 12 und der Wicklungsstrang 8 in den zur Nutöffnung erweiterten Nuten 13 derart untergebracht werden können, daß sich eine gute radiale Verteilung der Wickelköpfe im Sinne gering axial ausladender Wickelkopfkreuzungen ergibt.

Die erfindungsgemäße statorerregte Synchronmaschine läßt sich sowohl als Motor wie auch als Generator in der gleichen Antriebseinheit verwenden; im Falle eines Gleichstromnetzes, wie z.B. einem Kraftfahrzeug-Bordnetz werden die Arbeitswicklungen dabei über elektronische Kommutierungsschaltung an das Gleichstromnetz angeschlossen.

## Patentansprüche

1. Heteropolar erregte Synchronmaschine mit einem in Stator-Sektoren (1 bzw. 2) aufgeteilten Stator, mit einer statorseitigen Erregerwicklung (3 bzw.4), mit einer statorseitigen Arbeitswicklung (Wicklungsstränge 8 bzw.9), mit statorseitigen Dauermagneten (5 bzw. 6) und mit einem wicklungslosen, luftspaltseitig gezahnten geblechten Rotor (7), **gekennzeichnet** durch jeweils von mindestens einer Erregerwicklung (3 bzw.4) mit tangential zum Stator liegender Wicklungsachse umschlungene Stator-Sektoren (1 bzw. 2), an deren radial verlaufenden Trennstellen tangential magnetisierende Dauermagnete (5 bzw.6) angeordnet sind, deren Magnetfelder (3 bzw.4) denen der benachbarten Erregerwicklungen entgegengesetzt gerichtet sind.

2. Heteropolar erregte Synchronmaschine nach zumindest einem der Anspruch 1, **dadurch gekennzeichnet,** daß sich die Stator-Sektoren (1 bzw.2) mit den dazwischen angeordneten Dauermagneten (5 bzw.6) nur über einen Teil des rotorseitigen Luftspaltes erstrecken.

3. Heteropolar erregte Synchronmaschine nach Anspruch 1 und/oder 2, **dadurch gekennzeichnet,** daß der Rotor (7) mit dem Schwungrad und/oder der Kupplungsscheibe eines Verbrennungsmotors, insbesondere in einem Kraftfahrzeug, integriert ist.

4. Heteropolar erregte Synchronmaschine nach zumindest einem der Ansprüche 1 bis 3, **gekennzeichnet** durch eine Verbindung der Arbeitswicklungen (8 bzw.9) des Stators mit einer Stromrichterschaltung für einen Gleichstrommotor und/oder Gleichstromgenerator.

5. Heteropolar erregte Synchronmaschine nach einem der Ansprüche 1 bis 4, **dadurch gekennzeichnet,** daß die Stator-Segmente (1 bzw.2) im Bereich der umschlingenden Erregerwicklungen (3 bzw. 4) unter Beibehaltung eines annähernd gleichen Querschnitts unter Bildung einer Statornut (11 bzw. 21) für die Erregerwicklung (3 bzw. 4) nach radial innen verlaufend ausgebildet sind.

6. Heteropolar erregte Synchronmaschine mit nach zumindest einem der Ansprüche 1 bis 5, **dadurch gekennzeichnet,** daß bei einer Arbeitswicklung (Wicklungsstränge 8 bzw.9) der Wicklungsstrangzahl m=2 oder m=4 und der Nutenzahl je Pol und Wicklungsstrang q=1 die Statorzähne (14 bzw.15) wechselweise nach links bzw. rechts gegenüber der radialen Symmetrielinie (S) im Sinne von sich wechselweise zum Nutgrund bzw. zur Nutöffnung erweiterndem Querschnitt der Statornuten (12 bzw.13) schräggestellt sind.

## Claims

1. Heteropolar excited synchronous machine having a stator divided into stator sectors (1 and 2), having a stator-side exciter winding (3 and 4), having a stator-side power winding (winding phases 8 and 9), having stator-side permanent magnets (5 and 6) and having an unwound, laminated rotor (7) toothed on the side of the air gap, characterized by stator sectors (1 and 2) with at least one exciter winding (3 and 4), with a winding axis lying tangential to the stator, being wound around them in each case, on the radially extending separation points of which stator sectors there are arranged tangentially magnetizing permanent magnets (5 and 6), the magnetic fields (3 and 4) of which are arranged opposite those of the adjacent exciter windings.

2. Heteropolar excited synchronous machine according to claim 1, characterized in that the stator sectors (1 and 2) with the permanent magnets (5 and 6) arranged therebetween only extend over a part of the rotor-side air gap.

3. Heteropolar excited synchronous machine according to claim 1 and/or 2, characterized in that the rotor (7) is integrated with the flywheel and/or the coupling disc of an internal-combustion engine, in particular in a motor vehicle.

4. Heteropolar excited synchronous machine according to at least one of claims 1 to 3, characterized by a connection of the power windings (8 and 9) of the stator with a converter circuit for a direct-current motor and/or direct-current generator.

5. Heteropolar excited synchronous machine according to one of claims 1 to 4, characterized in that the stator segments (1 and 2) are constructed with the maintenance of an approximately equal cross section, with the formation of a stator groove (11 and 21) for the exciter winding (3 and 4) in the region in which the exciter windings (3 and 4) are wound around, so that they extend radially to the inside.

6. Heteropolar excited synchronous machine according to at least one of claims 1 to 5, characterized in that with a power winding (winding phases 8 and 9) of the winding-phase number m=2 or m=4 and the groove number per pole and winding phase q=1 the stator teeth (14 and 15) are alternately tilted to the left and right relative to the radial symmetry line (S) in the direction of the cross section of the stator grooves (12 and 13) widening alternately to the groove base and to the groove opening.

## Revendications

1. Machine synchrone à excitation hétéropolaire comportant un stator subdivisé en secteurs (1 et 2), un enroulement d'excitation (3 ou 4) situé côté stator, un enroulement de travail situé côté stator (faisceaux d'enroulement 8 et 9), des aimants permanents (5 et 6) situés côté stator et un rotor feuilleté (7) sans enroulement, qui comporte des dents sur le côté entrefer, caractérisée par respectivement des secteurs (1 et 2) du stator, sur lesquels est enroulé au moins un enroulement d'excitation (3 et 4) comportant un axe d'enroulement tangentiel au stator, et au niveau des zones radiales de séparation desquels sont disposés des aimants permanents (5 et 6) qui réalisent une aimantation tangentielle et dont les champs magnétiques (3 et 4) sont dirigés en sens opposé de ceux des enroulements d'excitation voisins.

2. Machine synchrone à excitation hétéropolaire suivant la revendication 1, caractérisée par le fait que les secteurs (1 et 2) du stator, pourvus des aimants permanents (5 et 6) disposés entre ces secteurs, s'étendent seulement sur une partie de l'entrefer situé côté rotor.

3. Machine synchrone à excitation hétéropolaire suivant la revendication 1 et/ou 2, caractérisée par le fait que le rotor (7) est intégré avec le volant et/ou le disque d'embrayage d'un moteur à combustion interne, notamment dans un véhicule automobile.

4. Machine synchrone à excitation hétéropolaire suivant au moins l'une des revendications 1 à 3, caractérisée par une liaison des enroulements de travail (8 et 9) du stator à un circuit redresseur pour un moteur à courant continu et/ou un générateur de courant continu.

5. Machine synchrone à excitation hétéropolaire suivant l'une des revendications 1 à 4, caractérisée par le fait que les segments (1 et 2) du stator sont agencés, dans la zone des enroulements d'excitation enveloppants (3 et 4) en étant disposés de manière à s'étendre radialement vers l'intérieur, tout en conservant une section transversale approximativement identique et en formant une encoche (11 et 21) du stator pour l'enroulement d'excitation (3 ou 4).

6. Machine synchrone à excitation hétéropolaire suivant au moins l'une des revendications 1 à 5, caractérisée par le fait que dans le cas d'un enroulement de travail (faisceaux d'enroulement 8 et 9) comportant un nombre de faisceaux d'enroulement m = 2 ou m = 4 et un nombre d'encoches par pôle et par faisceau d'enroulement q = 1, les dents (14 et 15) du stator sont disposées obliquement alternativement vers la gauche et vers la droite par rapport à l'axe de symétrie radial (S), en sorte que la section transversale des encoches statoriques (12 et 13) s'élargit alternativement vers le fond et vers l'ouverture des encoches.
